# EUROPÄISCHE PATENTSCHRIFT

(11) **EP 2 769 064 B1**
(45) Veröffentlichungstag und Bekanntmachung des Hinweises auf die Patenterteilung: **18.05.2016**
(21) Anmeldenummer: 12770070.6
(22) Anmeldetag: 27.09.2012
(51) Int. Cl.: F01N 3/20

(54) **DOSIEREINRICHTUNG**
DOSING SYSTEM
SYSTEME DE DOSAGE

(30) Priorität: 21.10.2011 DE 102011085020
(43) Veröffentlichungstag der Anmeldung: 27.08.2014
(73) Patentinhaber: Robert Bosch GmbH, 70442 Stuttgart (DE)
(72) Erfinder: KRUEGER, Juergen, 71686 Remseck-Aldingen (DE); KNITTEL, Achim, 71254 Ditzingen (DE); MEINGAST, Ulrich, 70499 Stuttgart (DE)
(86) Internationale Anmeldenummer: PCT/EP2012/069028
(87) Internationale Veröffentlichungsnummer: WO 2013/056963

(56) Entgegenhaltungen:
- EP-B1- 1 812 144
- DE-A1- 10 254 981
- DE-A1-102008 000 594

## Beschreibung

Die vorliegende Erfindung betrifft eine Dosiereinrichtung zur Einbringung eines Reduktionsmittels in ein Abgasrohr einer Brennkraftmaschine, wobei die Dosiereinrichtung ein Dosiermodul mit einem Dosierventil aufweist und das Dosiermodul über eine Druckleitung mit einer Fördereinrichtung verschaltet ist und das Dosiermodul stromaufwärts zu der Druckleitung hin ein den Fluidkanal des Dosiermoduls mit der Umgebung verbindenden sowie in Strömungsrichtung zu der Umgebung sperrendes Rückschlagventil aufweist. Weiterhin betrifft die Erfindung ein Verfahren zum Betreiben einer derartigen Dosiereinrichtung.

### Stand der Technik

Eine derartige Dosiereinrichtung ist aus der EP 1 812 144 B1 bekannt. Diese Dosiereinrichtung weist eine Einrichtung zum Entleeren der Dosiereinrichtung in einen Tank auf, die beispielsweise durch eine in der Drehrichtung umkehrbare Fördereinrichtung gebildet ist. Dadurch kann der zu entleerende Bereich entleert werden. Diese in der Drehrichtung umkehrbare Fördereinrichtung wird bei einer normalen Abschaltung der Dosiereinrichtung wirksam. Dabei ist das Dosierventil mit einem als Belüftungsventil ausgebildeten Rückschlagventil ausgestattet, durch das Luft beispielsweise aus der Umgebung in das Dosierventil während des Entleerungsvorgangs eingesaugt wird.

Eine weitere Dosiereinrichtung ist aus der DE 10 2008 000 594 A1 bekannt. Diese Dosiereinrichtung weist eine Einrichtung zum Entleeren der Dosiereinrichtung in einen Tank und/oder einen gegen Einfrieren unempfindlichen Bereich der Einrichtung oder der Dosiereinrichtung auf. Diese Einrichtung wird bei einer Abschaltung der Dosiereinrichtung wirksam. Dabei ist vorgesehen, dass diese Einrichtung eine mechanische Saug- und/oder Druckvorrichtung aufweist, deren Saug- und/oder Druckorgan mittels mindestens eines mechanischen Energiespeichers, insbesondere einer Feder, für einen das Reduktionsmittel in den Tank und/oder in einen gegen Einfrieren unempfindlichen Bereich befördernden Saug- und/oder Druckvorgang beaufschlagbar ist.

Der Erfindung liegt die Aufgabe zugrunde, eine Dosiereinrichtung bereitzustellen, mit der eine zuverlässige Rückführung von Reduktionsmittel von einem Dosierventil in eine Druckleitung, insbesondere auch bei hohen Temperaturen, darstellbar ist.

### Offenbarung der Erfindung

### Vorteile der Erfindung

Diese Aufgabe wird dadurch gelöst, dass das Rückschlagventil auf einer mit der Umgebung verbundenen Eingangsseite eine Drossel aufweist. Das erfindungsgemäße Verfahren zeichnet sich dadurch aus, dass in einem Notaus-Fall der Dosiereinrichtung durch einen schlagartigen Druckabfall insbesondere in der Druckleitung eine Impulsrücksaugung von Reduktionsmittel aus dem Dosiermodul in die Druckleitung erfolgt. Dieser Ausgestaltung beziehungsweise diesem Verfahren liegt die Erkenntnis zugrunde, dass eine Impulsrücksaugung zur Rückführung von Reduktionsmittel aus dem Dosierventil in zumindest die Druckleitung zunächst einmal bei allen Temperaturen funktioniert. Es hat sich aber herausgestellt, dass bei Temperaturen ab etwa 100°C (Siedetemperatur des Reduktionsmittels) das freiwerdende Volumen mit dem (Wasser)-Dampf des Reduktionsmittels gefüllt wird. Es entsteht folglich kein Unterdruck in dem Dosierventil. Ein Ansaugen von Abgas aus dem Abgasrohr ist dann aber nicht mehr oder nur ganz eingeschränkt möglich. Der Dampfdruck treibt zwar flüssiges Reduktionsmittel in die Druckleitung, aber beim abschließenden Abkühlen des verdampften Reduktionsmittels kondensiert der Wasserdampf jedoch wieder im Dosierventil und es entsteht dann - bei geschlossenem Dosierventil - ein Unterdruck, der das Reduktionsmittel aus der Druckleitung bzw. dem Fördermodul zurück in das Dosierventil zieht und es zumindest teilweise wieder befüllt. Ein Schutz gegen eine Beschädigung des Dosierventils durch eine Eisbildung bei Temperaturen unterhalb von -11°C (Gefrierpunkt des Reduktionsmittels) ist folglich beim Abstellen der Anlage bei hohen Reduktionsmitteltemperaturen (Heißabstellen) behindert. Dadurch, dass nunmehr ein zur Umgebung sperrendes Rückschlagventil mit einer auf der Eingangsseite angeordneten Drossel vorgesehen ist, wird bei der Abkühlung während der Kondensationsphase des Wasserdampfs über das Rückschlagventil Umgebungsluft in die Druckleitung eingesaugt. Diese eingesaugte Luft bildet ein Kompensationsvolumen ähnlich dem Abgas, mit dem die Eisdruckfestigkeit des Dosiermoduls sichergestellt ist. Insbesondere beim Einsatz einer Impulsrücksaugung ist das erfindungsgemäße Rückschlagventil mit der Drossel sinnvoll einsetzbar, kann aber auch bei anderen Einrichtungen zur Rückführung von Reduktionsmittel verwendet werden. Eine solche Impulsrücksaugung wird normalerweise zusätzlich zu einer normalen Einrichtung - beispielsweise in Form einer in der Drehrichtung umkehrbaren Fördereinrichtung für das Reduktionsmittel - zur Rückführung von Reduktionsmittel, die bei einem regulären Stopp der Dosiereinrichtung aktiv wird, vorgesehen. Die Impulsrücksaugung basiert darauf, dass die Dosiereinrichtung mit einem Förderdruck von beispielsweise 9 bar betrieben wird und zwischen der Fördereinrichtung und dem Dosierventil sich eine als "weiche" Schlauchleitung ausgebildete Druckleitung befindet, die durch den Druck eine Dehnung erfährt. Bei einem Notaus wird ein Ventil in der Fördereinrichtung schlagartig umgeschaltet. Durch den schlagartigen Druckabfall in der Druckleitung wird die Dehnung aufgehoben und durch das Zusammenziehen der Schlauchleitung wird das Reduktionsmittel in Richtung zu der Fördereinrichtung zurückgetrieben. Weiterhin entsteht dadurch im Dosierventil bei einer Temperatur von weniger als 100 °C ein Unterdruck, der das Dosierventil weitgehend entleert, wobei während der Impulsrücksaugung durch das (noch) geöffnete Dosierventil beziehungsweise dessen Spritzlöcher SL Abgas in das Dosierventil bis in die Druckleitung eingesaugt wird. Diese Impulsrücksaugung erfolgt in einem Zeitbereich von weniger als einer Sekunde.

Bei einer Temperatur von mehr als 100 °C wird das Reduktionsmittel zunächst einmal durch den Dampfdruck ebenfalls aus dem Dosierventil in die Druckleitung zurückgetrieben, das verdampfende Reduktionsmittel füllt aber dann den von der Impulsrücksaugung leergesaugten Fluidkanal des Dosiermoduls aus und bei durch Abkühlung bewirkter Kondensation des Dampfs und damit einhergehender Volumenreduzierung wird Luft über ein den Fluidkanal des Dosiermoduls mit der Umgebung verbindenden sowie in Strömungsrichtung zu der Umgebung sperrendes Rückschlagventil in den Fluidkanal eingesaugt.

In weiterer Ausgestaltung der Erfindung öffnet das Rückschlagventil bei einem Unterdruck von zumindest angenähert 100 mbar. In weiterer Ausgestaltung ist die Drossel und/oder das Rückschlagventil so ausgebildet ist, dass ein die Zeitdauer bis zum Öffnen des Rückschlagventils bestimmender Trägheitsgrad des Rückschlagventils von größer als 100 ms erreicht ist. Diese Ausgestaltung stellt sicher, dass bei Temperaturen von weniger als 100°C das Dosierventil im Wesentlichen über die Spritzlöcher SL des Dosierventils mit Abgas befüllt wird. Nur bei Temperaturen von > 100°C wird folglich das Rückschlagventil durch die drosselnde Ausgestaltung des Rückschlagventils bzw. der vorgeschalteten Drossel Umgebungsluft eingesaugt.

In Weiterbildung der Erfindung weist das Rückschlagventil einen Eingangsfilter auf. Dadurch ist sichergestellt, dass keine Schmutzpartikel in das Dosiermodul eingesaugt werden können und zu einer Beschädigung oder einem Ausfall der Dosiereinrichtung führen können und zu einer Undichtigkeit des Rückschlagventils führen kann.

In weiterer Ausgestaltung der Erfindung ist die Drosselwirkung des Rückschlagventils und/oder der Drossel größer als die Drosselwirkung von den Spritzlöchern des Dosierventils. Auch diese Ausgestaltung stellt sicher, dass insbesondere bei einer Rückführung von Reduktionsmittel unterhalb von einer Temperatur von 100°C im Wesentlichen Abgas in das Dosierventil zurückgesaugt wird.

In weiterer Ausgestaltung der Erfindung ist das Rückschlagventil in einen Dosierventilhalter des Dosiermoduls eingesetzt.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

### Kurze Beschreibung der Zeichnungen

Es zeigen:
- Figur 1: eine Ansicht eines Dosiermoduls mit einem erfindungsgemäß verbauten Rückschlagventil,
- Figur 2: ein hydraulisches Schaltbild einer Dosiereinrichtung,
- Figur 3a: ein Diagramm mit der Funktion der erfindungsgemäß ausgestalteten Dosiereinrichtung bei Reduktionsmitteltemperaturen oberhalb der Siedetemperatur und
- Figur 4: ein Diagramm mit der Funktion einer erfindungsgemäßen Dosiereinrichtung bei einer Temperatur des Reduktionsmittels unterhalb der Siedetemperatur.

### Ausführungsform der Erfindung

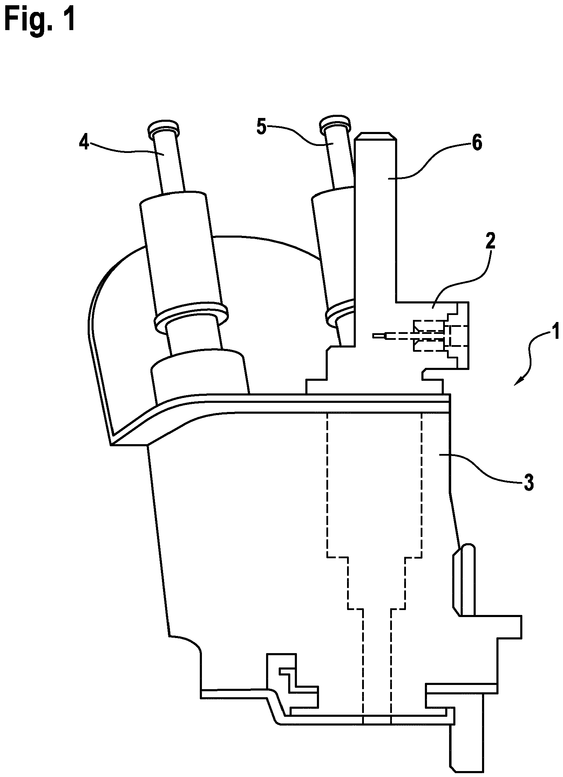

Figur 1 zeigt in einer vereinfachten Darstellung ein Dosiermodul 1 mit einem erfindungsgemäß verbauten Rückschlagventil 2. Das Dosiermodul 1 wird an eine Abgasleitung einer Brennkraftmaschine angebaut und dient zur Zuführung von einem Reduktionsmittel, insbesondere von wässrigem Harnstoff, in die Abgasleitung. Das Reduktionsmittel vermischt sich mit dem Abgas und das Gemisch von Abgas und Harnstoff wird unter Bildung von Ammoniak stromabwärts in einen insbesondere SCR-Katalysator eingeleitet, der in dem Abgas enthaltene schädliche Bestandteile in weniger schädliche Bestandteile aufspaltet. Genauer wird in dem SCR-Katalysator NOₓ selektiv reduziert. Eingesetzt wird eine solche Entstickungsanlage insbesondere bei mit Dieselkraftstoff betriebenen Brennkraftmaschinen.

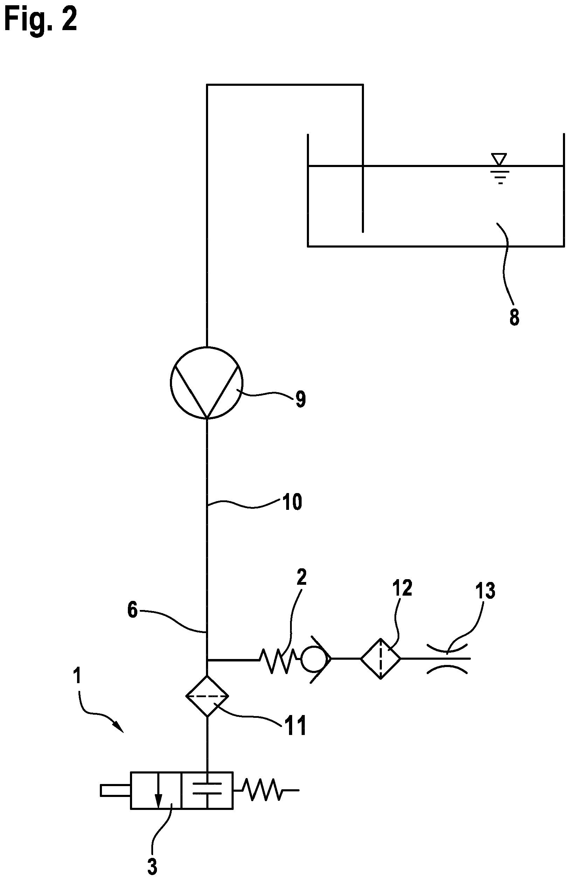

Das Dosiermodul 1 weist ein Gehäuse auf, in das ein Dosierventil 3 eingebaut ist. Das Dosierventil 3 ist in dem Ausführungsbeispiel wassergekühlt und weist einen Kühlkörper mit einer Wasserzuführleitung 4 und einer Wasserabführleitung 5 auf. Weiterhin weist das Dosierventil 3 einen Anschlussstutzen 6 zum Anschluss einer Druckleitung 10 (Figur 2) für das Reduktionsmittel auf. Im Bereich des Anschlussstutzens 6 ist das Dosierventil 3 mit einem Rückschlagventil 8 verschaltet. Das Rückschlagventil 2 wird in den nachfolgenden Figuren detailliert erläutert.

Figur 2 zeigt ein hydraulisches Schaltbild einer solchen Dosiereinrichtung mit dem erfindungsgemäß ausgestalteten Dosiermodul 1. Aus einem Tank 8 wird von einer Fördereinrichtung 9 Reduktionsmittel angesaugt und über die Druckleitung 10, die mit dem Anschlussstutzen 6 des Dosierventils 3 verbunden ist, dem Dosiermodul 1 zugeführt. Der Anschlussstutzen 6 ist über einen Filter 11 mit dem eigentlichen Dosierventil 3 verschaltet, das in der Figur 2 in der geschlossenen Stellung dargestellt ist. Weiterhin zweigt von dem Anschlussstutzen 6 eine Anschlussleitung zu dem Rückschlagventil 2 ab, das über einen Eingangsfilter 12 mit einer Drossel 13 zur Umgebung hin verbunden ist.

Die gesamte Dosiereinrichtung weist weiterhin eine Impulsrücksaugung auf, die insbesondere bei einer außerplanmäßigen Abschaltung der Dosiereinrichtung das Reduktionsmittel aus dem Dosierventil 3 zurück in die Druckleitung 10 rückführt. Die Impulsrücksaugung basiert darauf, dass die Dosiereinrichtung mit einem Förderdruck von beispielsweise 9 bar betrieben wird und zwischen der Fördereinrichtung 9 und dem Dosierventil 3, das beispielsweise als 4/2 Wegeventil ausgebildet ist, sich eine als "weiche" Schlauchleitung ausgebildete Druckleitung 10 befindet, die durch den Druck eine Dehnung erfährt. Bei einem Notaus der Dosiereinrichtung (zusammen mit der Brennkraftmaschine) wird ein Ventil in der Fördereinrichtung 9 schlagartig umgeschaltet. Durch den schlagartigen Druckabfall in der Druckleitung 10 wird die Dehnung aufgehoben und durch das Zusammenziehen der Schlauchleitung wird das Reduktionsmittel in Richtung zu der Fördereinrichtung zurückgetrieben. Weiterhin entsteht dadurch im Dosierventil 3 bei einer Temperatur von weniger als 100 °C ein Unterdruck, der das Dosierventil 3 weitgehend entleert, wobei während der Impulsrücksaugung durch das (noch) geöffnete Dosierventil 3 beziehungsweise dessen Spritzlöcher SL Abgas in das Dosierventil 3 bis in die Druckleitung 10 eingesaugt wird. Diese Impulsrücksaugung erfolgt in einem Zeitbereich von weniger als einer Sekunde.

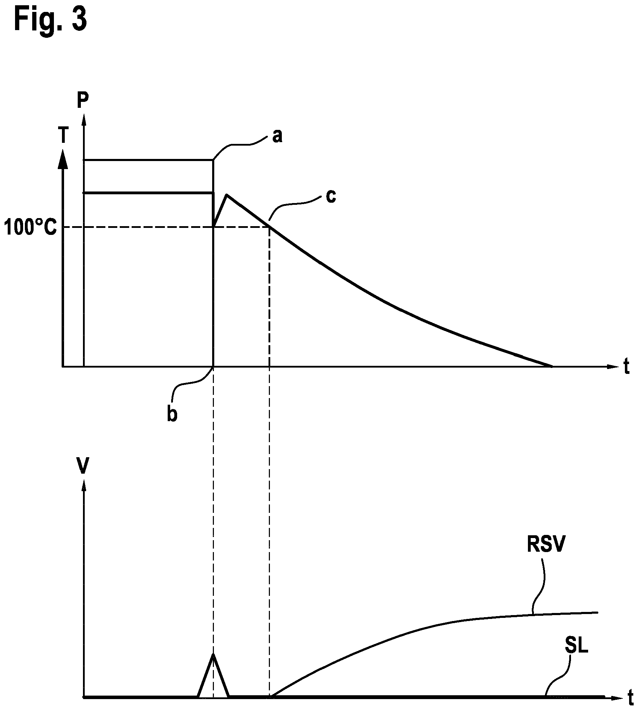

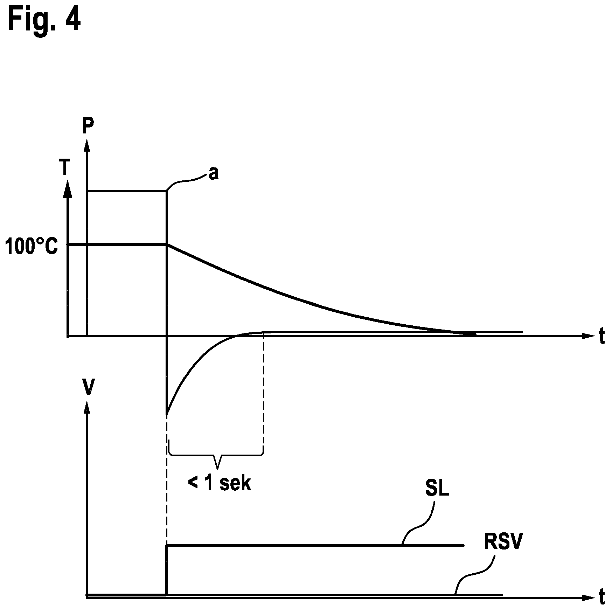

Bei einer Temperatur von mehr als 100 °C wird das Reduktionsmittel zunächst einmal durch den Dampfdruck ebenfalls aus dem Dosierventil 3 in die Druckleitung 10 zurückgetrieben, anschließend bildet sich aber in dem Dosierventil 3 bis in dem Bereich des Anschlussstutzens 6 Dampf (aus Wasser und Reduktionsmittel), der bei nach einer nachfolgenden Abkühlung wieder kondensiert und es entsteht bei geschlossenem Dosierventil ein Unterdruck. Das Dosierventil würde wieder mit Reduktionsmittel gefüllt, was die Eisdruckfähigkeit des Dosiermoduls 1 in Frage stellen könnte. Daher ist das Rückschlagventil 2 vorgesehen, das in einem solchen Fall das Ansaugen von Luft aus der Umgebung in die Druckleitung bedingt durch den Unterdruck ermöglicht und somit die Auffüllung des Dosierventils 3 mit Reduktionsmittel vermieden wird. Dadurch ist sichergestellt, dass in diesem kritischen Bereich ansonsten kondensierender Wasserdampf oder kondensierendes Reduktionsmittel bei Umgebungstemperaturen unterhalb von -11°C, bei denen das Reduktionsmittel gefriert, keinen Schaden anrichten kann. Die entsprechende Funktion ist in den nachfolgenden Figuren 3 und 4 dargestellt und erläutert.

Figur 3 zeigt in zwei zusammenhängenden Diagrammen die Funktion der erfindungsgemäß ausgestalteten Dosiereinrichtung bei einer Reduktionsmitteltemperatur oberhalb der Siedetemperatur von ca. 100°C. Die Abszisse beider Diagramme ist die Zeitachse t, während die innere Ordinate des oberen Diagramms eine Druckordinate P und die äußere Ordinate eine Temperaturordinate T ist. Der Druck in der Dosiereinrichtung fällt beispielsweise ausgehend von einem Anfangsdruck von 9 bar beim Erreichen des Abschaltpunktes der Dosiereinrichtung und der eingeleiteten Impulsrücksaugung zum Zeitpunkt a schlagartig von den angegebenen 9 bar auf 0 bar (Punkt b) ab und verbleibt auf diesem Druck. Gleichzeitig bleibt die Temperatur ausgehend von einer Temperatur von knapp oberhalb von 100°C bis zu dem Abschaltzeitpunkt nahezu konstant und geht im Abschaltzeitpunkt kurzfristig zurück, verbleibt aber in einem Bereich, in dem das Reduktionsmittel und das dem Reduktionsmittel beigemischte Wasser verdampft. Das Reduktionsmittel kühlt dann allmählich ab und nach erreichen der Temperatur von 100°C kondensiert das in dem Dosierventil 3 verbliebene verdampfte Reduktionsmittel bzw. Wasser. Das darunter dargestellte Diagramm der Figur 3 zeigt hierzu das angesaugte Gasvolumen V ebenfalls aufgetragen über der Zeit t.

Über das Dosierventil 3 bzw. deren Spritzlöcher SL, die - wie ausgeführt - noch nicht abgesperrt sind, wird das Gasvolumen SL angesaugt. Hier bildet sich beim Abschaltpunkt a ein kleiner Peak, der aber infolge des Verdampfungsvorgangs des Reduktionsmittels und des Wassers wieder auf 0 zurück geht. Durch das erfindungsgemäß angeordnete und ausgebildete Rückschlagventil 2 wird aber nach dem Abkühlvorgang auf eine Temperatur von 100°C (Punkt c) kontinuierlich steigend ein Gasvolumenstrom RSV angesaugt, das bewirkt, dass die Druckleitung 10 soweit mit Luft gefüllt wird, dass diese ein Kompensationsvolumen ähnlich dem Abgas beim Standard-Rücksaugen zur Verfügung stellt, mit dem die Eisdruckfestigkeit des Dosiermoduls sichergestellt werden kann. Ein Gefrierschaden kann somit ausgeschlossen werden.

In Figur 4 ist der gleiche sich abspielende Vorgang bei einer Temperatur von dem Reduktionsmittel unterhalb von 100°C wiedergegeben. Der Druck fällt bei dem Abschaltpunkt a wieder schlagartig bis auf 0 bar ab und es kann sich kurzfristig (im Zeitbereich von weniger als 1 Sekunde) ein Unterdruck bilden. Die Temperatur des Reduktionsmittels beträgt in diesem Fall aber deutlich unterhalb von 100°C und kühlt sich danach kontinuierlich ohne eine Dampfbildung ab. Entsprechend zeigt das untere Diagramm, dass in diesem Falle das angesaugte Gasvolumen RSV über das Rückschlagventil 2 angenähert 0 ist, während das über die Spritzlöcher SL des Dosierventils 3 angesaugte Gasvolumen angenähert dem Wert entspricht, der gemäß Figur 3 über das Rückschlagventil 2 angesaugt wird.

## Patentansprüche

1. Dosiereinrichtung zur Einbringung eines Reduktionsmittels in ein Abgasrohr einer Brennkraftmaschine, wobei die Dosiereinrichtung ein Dosiermodul (1) mit einem einen Fluidkanal in dem Dosiermodul (1) beherrschenden Dosierventil (3) aufweist und das Dosiermodul (1) über eine Druckleitung (10) mit einer Fördereinrichtung (9) verschaltet ist, und das Dosiermodul (1) stromaufwärts zu der Druckleitung (10) hin ein den Fluidkanal des Dosiermoduls (1) mit der Umgebung verbindendes sowie in Strömungsrichtung zu der Umgebung sperrendes Rückschlagventil (2) aufweist,
**dadurch gekennzeichnet, dass** das Rückschlagventil (2) auf einer mit der Umgebung verbundenen Eingangsseite eine Drossel (13) aufweist, wobei die Dosiereinrichtung derart ausgebildet ist, dass in einem Notaus-Fall der Dosiereinrichtung durch einen schlagartigen Druckabfall insbesondere in der Druckleitung (10) eine Impulsrücksaugung von Reduktionsmittel aus dem Dosiermodul (1) in die Druckleitung erfolgt.

2. Dosiereinrichtung nach Anspruch 1,
**dadurch gekennzeichnet, dass** das Rückschlagventil (2) bei einem Unterdruck von angenähert 100 mbar öffnet.

3. Dosiereinrichtung nach einem der vorherigen Ansprüche,
**dadurch gekennzeichnet, dass** das Rückschlagventil (2) bzw. die Drossel (13) so ausgebildet sind, dass das Rückschlagventil (2) träge reagiert.

4. Dosiereinrichtung nach Anspruch 3,
**dadurch gekennzeichnet, dass** das Rückschlagventil (2) einen die Zeitdauer bis zum Öffnen des Rückschlagventils (2) bestimmenden Trägheitsgrad von größer als 100 ms aufweist.

5. Dosiereinrichtung nach einem der vorherigen Ansprüche,
**dadurch gekennzeichnet, dass** das Rückschlagventil (2) einen Eingangsfilter (12) aufweist.

6. Dosiereinrichtung nach einem der vorherigen Ansprüche,
**dadurch gekennzeichnet, dass** die Drosselwirkung des Rückschlagventils (2) und/oder der Drossel (13) größer ist als die Drosselwirkung von Spritzlöchern des Dosierventils (3).

7. Dosiereinrichtung nach einem der vorherigen Ansprüche,
**dadurch gekennzeichnet, dass** das Rückschlagventil (2) in einen Dosierventilhalter des Dosiermoduls eingesetzt ist.

8. Verfahren zum Betreiben einer Dosiereinrichtung zur Einbringung eines Reduktionsmittels in ein Abgasrohr einer Brennkraftmaschine, wobei die Dosiereinrichtung ein Dosiermodul (1) mit einem einen Fluidkanal in dem Dosiermodul (1) beherrschenden Dosierventil (3) aufweist und das Dosiermodul (1) über eine Druckleitung (10) mit einer Fördereinrichtung (9) verschaltet ist, und das Dosiermodul (1) stromaufwärts zu der Druckleitung (10) hin ein den Fluidkanal des Dosiermoduls (1) mit der Umgebung verbindendes sowie in Strömungsrichtung zu der Umgebung sperrendes Rückschlagventil (2) aufweist,
**dadurch gekennzeichnet, dass** in einem Notaus-Fall der Dosiereinrichtung durch einen schlagartigen Druckabfall insbesondere in der Druckleitung (10) eine Impulsrücksaugung von Reduktionsmittel aus dem Dosiermodul (1) in die Druckleitung erfolgt.

9. Verfahren nach Anspruch 8,
**dadurch gekennzeichnet, dass** der Rücksaugvorgang im Zeitbereich von weniger als einer Sekunde erfolgt.

10. Verfahren nach Anspruch 8 oder 9,
**dadurch gekennzeichnet, dass** bei einer Temperatur des Reduktionsmittels von weniger als 100°C Abgas durch Spritzlöcher des während der Impulsrücksaugung noch geöffneten Dosierventils (3) in das Dosiermodul (1) eingesaugt wird.

11. Verfahren nach einem der Ansprüche 8 bis 10,
**dadurch gekennzeichnet, dass** bei einer Temperatur des Reduktionsmittels von mehr als 100°C das verdampfende Reduktionsmittel den von der Impulsrücksaugung leergesaugten Fluidkanal des Dosiermoduls (1) ausfüllt und bei durch Abkühlung bewirkter Kondensation des Dampfs und damit einhergehender Volumenreduzierung Luft über ein das Fluidkanal des Dosiermoduls (1) mit der Umgebung verbindende sowie in Strömungsrichtung zu der Umgebung sperrende Rückschlagventil (2) in den Fluidkanal eingesaugt wird.

## Claims

1. Metering device for introducing a reducing agent into an exhaust gas pipe of an internal combustion engine, the metering device having a metering module (1) with a metering valve (3) which is in control of a fluid duct in the metering module (1), and the metering module (1) being connected to a delivery device (9) via a pressure line (10), and, upstream towards the pressure line (10), the metering module (1) having a check valve (2) which connects the fluid duct of the metering module (1) to the surroundings and shuts off in the flow direction to the surroundings, **characterized in that** the check valve (2) has a throttle (13) on an input side which is connected to the surroundings, the metering device being configured in such a way that return pulse suction of reducing agent from the metering module (1) into the pressure line takes place in an emergency stop case of the metering device as a result of a sudden pressure drop, in particular, in the pressure line (10).

2. Metering device according to Claim 1, **characterized in that** the check valve (2) opens at a vacuum of approximately 100 mbar.

3. Metering device according to either of the preceding claims, **characterized in that** the check valve (2) and the throttle (13) are configured in such a way that the check valve (2) responds sluggishly.

4. Metering device according to Claim 3, **characterized in that** the check valve (2) has a degree of sluggishness which determines the time duration until opening of the check valve (2) of greater than 100 ms.

5. Metering device according to one of the preceding claims, **characterized in that** the check valve (2) has an inlet filter (12).

6. Metering device according to one of the preceding claims, **characterized in that** the throttling action of the check valve (2) and/or of the throttle (13) is greater than the throttling action of spray holes of the metering valve (3).

7. Metering device according to one of the preceding claims, **characterized in that** the check valve (2) is inserted into a metering valve holder of the metering module.

8. Method for operating a metering device for introducing a reducing agent into an exhaust gas pipe of an internal combustion engine, the metering device having a metering module (1) with a metering valve (3) which is in control of a fluid duct in the metering module (1), and the metering module (1) being connected to a delivery device (9) via a pressure line (10), and, upstream towards the pressure line (10), the metering module (1) having a check.valve (2) which connects the fluid duct of the metering module (1) to the surroundings and shuts off in the flow direction to the surroundings, **characterized in that** return pulse suction of reducing agent from the metering module (1) into the pressure line takes place in an emergency stop case of the metering device as a result of a sudden pressure drop, in particular, in the pressure line (10).

9. Method according to Claim 8, **characterized in that** the return suction operation takes place in the time span of less than one second.

10. Method according to Claim 8 or 9, **characterized in that**, at a temperature of the reducing agent of less than 100°C, exhaust gas is sucked into the metering module (1) through spray holes of the metering valve (3) which is still open during the return pulse suction.

11. Method according to one of Claims 8 to 10, **characterized in that**, at a temperature of the reducing agent of more than 100°C, the evaporating reducing agent fills the fluid duct of the metering module (1) which is sucked empty by the return pulse suction and, in the case of condensation of the vapour which is brought about by way of cooling and the associated reduction in volume, air is sucked into the fluid duct via a check valve (2) which connects the fluid duct of the metering module (1) to the surroundings and shuts off in the flow direction to the surroundings.

## Revendications

1. Dispositif de dosage pour l'introduction d'un agent réducteur dans un tuyau d'échappement d'un moteur à combustion interne, le dispositif de dosage présentant un module de dosage (1) avec une soupape de dosage (3) contrôlant un canal de fluide dans le module de dosage (1) et le module de dosage (1) étant mis en circuit par le biais d'une conduite de pression (10) avec un dispositif de refoulement (9), et le module de dosage (1) présentant, en amont, en direction de la conduite de pression (10), un clapet antiretour (2) reliant le canal de fluide du module de dosage (1) à l'environnement et le bloquant dans la direction d'écoulement vers l'environnement,
**caractérisé en ce que** le clapet antiretour (2) présente un étranglement (13) sur un côté d'entrée connecté à l'environnement, le dispositif de dosage étant réalisé de telle sorte que, dans une situation de panne du dispositif de dosage, une réaspiration sous forme d'impulsion de l'agent réducteur depuis le module de dosage (1) dans la conduite de pression se produise par une chute brutale de pression, en particulier dans la conduite de pression (10).

2. Dispositif de dosage selon la revendication 1,
**caractérisé en ce que** le clapet antiretour (2) s'ouvre à une dépression d'environ 100 mbar.

3. Dispositif de dosage selon l'une quelconque des revendications précédentes,
**caractérisé en ce que** le clapet antiretour (2), respectivement l'étranglement (13), sont réalisés de telle sorte que le clapet antiretour (2) réagisse lentement.

4. Dispositif de dosage selon la revendication 3,
**caractérisé en ce que** le clapet antiretour (2) présente un degré d'inertie supérieur à 100 ms déterminant la durée jusqu'à l'ouverture du clapet antiretour (2).

5. Dispositif de dosage selon l'une quelconque des revendications précédentes,
**caractérisé en ce que** le clapet antiretour (2) présente un filtre d'entrée (12).

6. Dispositif de dosage selon l'une quelconque des revendications précédentes,
**caractérisé en ce que** l'effet d'étranglement du clapet antiretour (2) et/ou de l'étranglement (13) est plus important que l'effet d'étranglement de trous d'injection de la soupape de dosage (3).

7. Dispositif de dosage selon l'une quelconque des revendications précédentes,
**caractérisé en ce que** le clapet antiretour (2) est inséré dans un support de soupape de dosage du module de dosage.

8. Procédé pour faire fonctionner un dispositif de dosage pour l'introduction d'un agent réducteur dans un tuyau d'échappement d'un moteur à combustion interne, le dispositif de dosage présentant un module de dosage (1) avec une soupape de dosage (3) contrôlant un canal de fluide dans le module de dosage (1) et le module de dosage (1) étant mis en circuit par le biais d'une conduite de pression (10) avec un dispositif de refoulement (9), et le module de dosage (1) présentant, en amont, en direction de la conduite de pression (10), un clapet antiretour (2) reliant le canal de fluide du module de dosage (1) à l'environnement et le bloquant dans la direction d'écoulement vers l'environnement,
**caractérisé en ce que** dans le cas d'une panne du dispositif de dosage, il se produit une réaspiration sous forme d'impulsion de l'agent réducteur depuis le module de dosage (1) dans la conduite de pression par une chute brutale de pression, en particulier dans la conduite de pression (10).

9. Procédé selon la revendication 8,
**caractérisé en ce que** l'opération de réaspiration s'effectue dans une plage temporelle inférieure à une seconde.

10. Procédé selon la revendication 8 ou 9,
**caractérisé en ce que** du gaz d'échappement est aspiré dans le module de dosage (1) à une température de l'agent réducteur inférieure à 100°C à travers des trous d'injection de la soupape de dosage (3) encore ouverte pendant la réaspiration sous forme d'impulsion.

11. Procédé selon l'une quelconque des revendications 8 à 10,
**caractérisé en ce qu'**à une température de l'agent réducteur supérieure à 100° C, l'agent réducteur s'évaporant remplit le canal de fluide du module de dosage (1) aspiré à vide par la réaspiration sous forme d'impulsion et lors de la condensation de la vapeur provoquée par le refroidissement et donc de la réduction de volume associée, de l'air est aspiré dans le canal de fluide par le biais d'un clapet antiretour (2) reliant le canal de fluide du module de dosage (1) à l'environnement et le bloquant dans la direction d'écoulement vers l'environnement.
